# EUROPEAN PATENT SPECIFICATION

(11) **EP 0 883 350 B1**
(45) Date of publication and mention of the grant of the patent: **19.12.2001**
(21) Application number: 97904950.9
(22) Date of filing: 05.03.1997
(51) Int. Cl.: A23G 9/02

(54) **PROTEIN RICH DIETARY ICE CREAM**
PROTEINREICHES DIÄTEISCREME
CREME GLACEE DIETETIQUE RICHE EN PROTEINES

(30) Priority: 05.03.1996 BG 10040196
(43) Date of publication of application: 16.12.1998
(73) Proprietor: Jalamov, Tsvetko Nikolaev, Sofia 1000 (BG); Popov, Georgi Grigorov, Sofia 1220 (BG)
(72) Inventor: POPOV, Georgi, Grigorov, Sofia 1220 (BG); JALAMOV, Tsvetko, Nikolaev, Sofia 1000 (BG); RADENKOVA, Anastasija, Genadieva, Sofia 1000 (BG)
(74) Representative: Chivarov, Georgui, Dr. Dipl.Ing.
(86) International application number: BG9700003
(87) International publication number: WO9732486

(56) References cited:
- EP-A- 0 240 326
- EP-A- 0 657 108
- US-A- 5 248 503
- DATABASE WPI Week 9204 Derwent Publications Ltd., London, GB; AN 92-027319 XP002037369 & JP 03 272 651 A (SAN.EI CHEM. IND.) , 4 December 1991
- PATENT ABSTRACTS OF JAPAN vol. 8, no. 145 (C-232), 6 July 1984 & JP 59 051747 A (KOUZOU KOBAYASHI), 26 March 1984,
- DATABASE WPI Week 9141 Derwent Publications Ltd., London, GB; AN 91-299409 XP002037370 & JP 03 198 743 A (AJINOMOTO) , 29 August 1991

## Description

The wholesome model is related to the ingredients of protein rich dietary ice cream, applicable for preparing special, herb-and-protein based ice creams at home, at public dining establishments and ice cream plants as well as for serial production in food industry.

### PREVIOUS STATE OF THE TECHNIQUE

There are different recipes for preparing dietary ice creams on a yoghurt base and/or pure fruit base combined with special and auxiliary additives such as: sweeteners, stabilizing and foaming agents, flavor correcting agents, coloring agents, extracts and/or herb decoctions (A-SU 895392 A). The ingredients of a protein rich fruit ice cream containing salep hydrolyzate and/or mallow-root hydrolyzate as an emulsifier and stabilizer, are particularly well-known. The fruit ice cream contains extra fruit mass and/or fruit sirup as a taste correcting agent, and the high protein content is guaranteed by the egg-white hydrolyzate (Patent BG 60605 B1). The fruit mass may be one of the following: fresh or dried fruit slices, fruit gruel, jam, concentrated sirup, marc, cake, etc. The method of obtaining the foamy fruit cream is standard; the components are added according to the classic scheme.

The low gustatory qualities, weak flavor, and the product's comparative-ly low biological qualities, are the shortcomings of the above foamy fruit creams for ice cream. Fruit mass is used incompletely, and that is why the end product does not possess the desired qualities of a dietary, prophylactic and curing product. The ice cream mass is not sufficiently homogeneous when prepared in accordance with this method. A fundamental shortcoming of the ice cream series "Didi" is the ice creams are impossible to be preserved for a period of 3 to 6 months without changing the product's biological and gustatory qualities.

An yoghurt-based ice cream recipe (SU 1750601 A1) is known, including low-fat milk, refined sugar, skimmed milk powder, suitable stabilizers (for example, gelatin, agar-agar, etc.), acidophilic leaven, and finely cut fruit and/or vegetables, preferably drained cabbage slices.

The basic shortcoming of this ice cream is the mixture's strong irritating action on people suffering from intestinal and stomach disorders; the ice cream is not quite durable either.

The use of salep in the preparation of ice creams is known from JP-A-3-272 651 and the use of Happophae rhamnoides as a nucleation agent for the preparation of ice creams is known from EP-A-0 657 108.

The wholesome model according to the present invention is aimed at suggesting ingredients for a protein rich dietary ice cream with an improved flavor and nutritive qualities, which could be preserved for up to 6 months after the foamy cream is prepared; its antiseptic packing and deep freezing.

The wholesome model according to the present invention suggests the following ingredients for preparing the foamy cream before its ripening and freezing, in weight.%:

| | |
|---|---|
| yoghurt (low-fat, up to 2%) | 50-70 |
| refined sugar | 10-25 |
| egg-white lyophilyzate (protein concentrate) | 5-12 |
| powder milk | 4-8 |

| *hydrolyzates:* | |
|---|---|
| - Viscum album L. | up to 0.6 |
| - Radix Althaea officinalis and/or Tuber Orchis mascula L. | up to 0.6 |

| *oil or oil extract:* | |
|---|---|
| Happophae rhamnoides L. | up to 0.1 |
| stabilizer E5771 ("Polsgar") | up to 0.01 |

The recipe is based on natural Bulgarian yoghurt which differs from traditional world-known yoghurt by its specific flavor, nutritive and medical properties, due to its fermentation as a result of the action of lactic bacteria: Str. thermophilus and Lactobac. bulgaricus. The antimicrobe action of this natural yoghurt is proved as well as the dietary and medical properties of this type of dairy products, especially as far as the antiatherogeneous effect is concerned.

Depending on the medical and dietary purposes, the foamy cream may also include vegetable mass such as: vegetable and/or fruit products slices, pieces, drained pieces, vegetable or fruit mash, odor-free garlic mass, as well as all kinds of fruit and/or fruit-vegetable combinations. If the taste has to be improved, chocolate additives and/or pure chocolate may be included. The Tuber Orchis drug is rich in mucous substances which make the ice cream rise and keep it stable enough. The drug has a bactericidal and anti-cold effect. The Radix Althaea drug has an analogous effect. The above drug hydrolyzates improve the gustatory and foamy qualities as well as the stability of the ice cream.

The Happophae rhamnoides L. oil improves the digestive system's functioning and prophylactically improves the condition of the body in cases of intestinal and stomach disorders. It also has a prophylactic effect in cases of radiation exposure in small doses.

The addition of the above hydrolyzates and oil helps improve the aroma of the ice cream and the foamy qualities of the cream based on natural Bulgarian yoghurt. The preparation of the basic mixture and the including of the components is done in accordance with the standard scheme: mixing the basic ingredients, additives and filling agents in a certain order, homogenation, flavoring, coloring, cooling, ripening, freezing, forming and antiseptic packing, deep hardening and preserving.

The wholesome model of protein rich dietary ice cream offered has the following advantages: balanced protein content according to the contemporary dietary norms; minimum quantity of fats; the herb drug and Happophae rhamnoides L. oil improves the cream's emulsification to a foamy ice cream mass and guarantees certain medical and prophylactic properties of the mixture. (For example: prophylaxis in cases of cold, intestinal disorders, metabolism, etc.) A minimum of basic and auxiliary ingredients is used which makes it comparatively cheap and prefered for mass production at public dining establishments and food plants.

Its good consistency and stability when frozen and packed in antiseptic packings, allow the ice cream to be preserved for more than 6 months. The physical, chemical and organoleptic tests show that the suggested wholesome model of ice cream ingredients, prepared from the recipe mixtures, is characterized by excellent organoleptic properties and high nutritive value; of every 100 kg of the product, an average of over 6.3 - 6.7 kg of butter, 5 - 6.5 kg of skimmed powder milk are economized in comparison with the traditional recipes.

The organoleptic control of the ice cream produced is maintained according to the Bulgarian State Standard - 392-77, by a system of criteria: appearance and form, color, consistency, structure, taste, aroma and other additional indices. The fat content is below the norm of milk and fruit ice creams - 2.8%, and the limit acidity does not exceed 70 T, characteristic of the milk-fruit and fruit ice creams. The melting time of the yoghurt based ice cream with fruit and/or fruit and vegetable mass, is up to 25 - 30 minutes, and the ice cream's density depending on the temperature at which the ice cream leaves the freezer, is over 100 - 110%.

The following examples explain the wholesome model without restricting it:

Example 1. The following ingredients are used for dietary ice cream:

| | |
|---|---|
| Yoghurt up to 2% fat | 2000 g |
| Refined sugar | 340 g |
| Egg-white mass (lyophilyzate) | 280 g |
| Skimmed milk powder | 180 g |

| Drug hydrolyzate: | |
|---|---|
| - Viscum album L. | 12 g |
| - Radix Althaea officinalis L. | 12 g |
| and/or Tuber Orchis mascula L. | up to 6 g |
| Happophae rhamnoides oil (40% solution) | 0.35 g |
| Stabilizer E5771 ("Polsgar") | 0.30 g |
| Wheat (potato) starch | as prefered |
| Fruit and/or fruit-vegetable mass | from 80 to 240 g |

The above components are added in the following order:

About 150 ml whey is drained from the yoghurt (1 kg of the product), which is used for obtaining water extract from the herbs. After it is left for 8-12 hrs., the infusion is filtered and the drug hydrolyzates thus obtained is mixed with the remaining yoghurt (protein rich), the refined sugar, the wheat starch if applicable, skimmed powder milk, egg-white lyophilyzate (protein concentrate); the mixture is homogenated intensively for 4-5 min. after each new addition. Then the Happophae rhamnoides oil is added and the mixture is homogenated for 1-2 min., then a suitable stabilizer (gelatin, agar-agar, pectin, caseinate, cellulose derivates, etc.), preferably "Polsgar" E5771. The stabilizer improves the mixture's viscosity and helps the formation of small ice crystals at the time the mixture is being actively frozen. Follow the mixture's cooling and ripening at +2 to -6°C for 8 to 12 hrs. It is prefered a two-phase ripening to be applied: the first cooling at 10-15°C for 2-3 hrs., and the second phase of cooling and ripening at lower temperatures to -6°C.

To the ripened mixture, flavoring and coloring substances may be added, preferably natural. At the first stage there may also be added some fruit and/or vegetable mass of preliminary cut plant products, especially finely cut fruit and/or vegetables, dried fruit and/or vegetables, frozen fruit and/or vegetables, fruit mass, nectars, jams, vegetable mash, pastes and others, including odor-free onion or garlic mass, etc., in strictly observed quantities according to the recipe.

According to the exemplary fulfilment, different combinations of dairy and/or fruit bases combined with different quantities of yoghurt (for example, natural yoghurt), and Happophae rhamnoides oil as well as different kinds of vegetable and fruit-vegetable filling mass. It is also interesting to add a part of the refined sugar (up to 40%) in the form of thick sirup to the mixture after the inversion (for example, to the fruit and/or vegetable mixture).

The experimental data show that the different versions of the recipe as a wholesome model allow mainly natural and ecological products to be used, and thus enrich the content and balance it as to protein, fat, carbohydrate, vitamine, micro- and macro-element content, etc., due to the essential oils, carotine, ascorbin acid and other essential substances for the human body they contain. Also, in the recipe a prolonged action of the aroma, taste and other organoleptic properties as well as the bactericidal and medical properties of the ice cream as a whole, are achieved due to the addition of yoghurt, herb drug and oil. As to the vitamin content, the wholesome model answers the standard norms and, according to the laboratory examinations, contains: vitamin A - 0.08 mg, β-carotine - 0.13 mg, vitamin D - 0.04 mkg, vitamin C - 2.60 mg, vitamin B6 - 0.17 mg, vitamin B12 - 0.54 mg, biotin - 2.48 mg, niacin - 0.08 mg, pantheon acid - 0.35 mg, riboflavin - 0.35 mg, tiamin - 0.07 mg, pholacin - 8.10 mkg, cholin- 9.50 mg, etc.

The frozen ice cream is packed in standard large packages (metal containers - tubes) or in small packings - waffles, blocks, cups, etc., as well as small paper or plastic packings. Then it is hardened to complete freezing of the remaining water, which is done in special freezers or tunnel-freezers at -20 to -30°C, the hardening temperature not exceeding -15°C. The ice cream thus hardened may be preserved under the standard conditions (-15 to -25°C) for up to 6 months without filling substances, and up to 7-8 months with fruit and/or vegetable mass.

An important condition when the ice cream is prepared is the frozen cream to be protected from developing microorganisms inside; that is why it should be packed in septic conditions and sterile packings. If this is oserved, the duration of the product is also extended by 3-4 months compared to the traditional packings for such frozen products, and the basic organoleptic properties are preserved along with the medical and prophylactic ones. At normal cooling temperature, if deep-freezing equipment is not used, the ice cream may be preserved for 3 to 8 weeks at +4 to +8°C in stores, provide it is septically packed.

## Claims

1. Protein-rich dietary ice cream containing dairy base, refined sugar as a sweetener, stabilizer, additives and filling substances based on fruits and/or fruit-and-vegetables,
**characterized in that**
it contains Happophae rhamnoides L. oil or Happophae rhamnoides L. oil extract, and natural yoghurt (low-fat) as a basic dairy ingredient, the ratio of the components in wt.% being the following:
| | |
|---|---|
| Natural low fat yoghurt | 50-70 |
| Refined sugar | 10-25 |
| Egg-white lyophilizate, powder | 5-12 |
| Skimmed powder milk | 4-10 |
| ***Drug hydrolyzate:*** | |
|---|---|
| Viscum album L. | up to 0.6 |
| Radix Althaea officinalis L. and/or Tuber Orchis mascula L. | up to 0.6 |
| Happophae rhamnoides L. oil and/or oil extract | up to 0.1 |
| Stabilizer - "Polsgar" E5771 | up to 0.01 |
| Fruit and/or vegetables mass at will | 8-24 |

## Patentansprüche

1. Diätetische Eiscreme von hohem Eiweißgehalt, die in ihrer Zubereitung als Zutaten die folgende Produkte beinhaltet: Milch- und/oder Milch-Eiweißbasis, Raffinade als Versüßer , Stabilisator, Verbesserer, und nach Wunsch- Füllung auf einer Obst- und /oder Obst- Gemüsen- Basis, die dadurch sich auszeichnet, daß sie zusätzlich Öl oder Ölextrakt aus Happophae rhamnoides L. und daß als Basis bulgarische fettarme Sauermilch beinhaltet, indem die Zutaten die folgenden Gewichtsanteile in % haben:
| | |
|---|---|
| Fettarme bulgarische Sauermilch | 50-70 |
| Raffinade | 10-25 |
| Ei- Eiweiß- Lyophilisat (Pulver) | 5-12 |
| Enfettete Trockenmilch (Pulver) Hydrolysat aus Droge von | 4-10 |
| - Viscum album L. | bis zu 0.6 |
| Radix Althaea officinals L. und/oder | bis zu 0.6 |
| Tuber Orchis mascula L. | bis zu 0.6 |
| Öl und /oder Ölextrakt aus: | |
|---|---|
| Happophae rhamnoides L. | bis zu 0,1 |
| Stabilisator- E5771 (Polsgar) | bis zu 0.01 |
| Frucht - und/oder Gemüsemasse nach Wunsch | 8-24 |
Literatur:
1. Urheberschein (AC)- SU Nr. 895392
2. Patent (P) Nr. 0240326
3. Patent (P)- BG Nr. 60605
4. Urheberschein (AC)- SU Nr. 1750601

## Revendications

1. La glace dietetique a haut contenu de proteines qui inclut des produits laitiers, du sucre raffine comme adoucissant,des stabilisateurs, des aditifs et des substances de garniture bases sur les fruits et/ou fruits et legumes se **caracterise par le fait qu'**elle contient de l'extrait d'huile de Happophae rhamnoides L., et du Yoghurt naturel ( bas contenu en graisse)comme ingredient dietetique de base, le ratio des composant en poids % est le suivant:
| | |
|---|---|
| Yoghurt naturel a bas contenu en graisse | 50 - 70 |
| Sucre raffine | 10 - 25 |
| Blanc d'oeuf lyophilise, poudre | 5 - 12 |
| Lait en poudre ecreme | 4 - 10 |
| Hydrolyse de drogues: | |
|---|---|
| Viscum album | jusqu'a 0,6 |
| Radix Althaea officinalis L. et/ou | jusqu'a 0,6 |
| Tuber Orchis mascula L. | |
| Huile de Happophae rhamnoides L.et/ou | |
| Extrait d'huile | jusqu'a 0,1 |
| Stabilisateur "Polsgar" E5771 | jusqu'a 0,01 |
| Masse de fruits et/ ou legumes au choix 8-12 | |
Litterature:
1. AC-SU No. 895393
2. Π-EP No.0240326
3. Π-BG No. 60605
4. AC-SU No.1750601
